Europäisches Patentamt

European Patent Office

Office européen des brevets

(19)

(11) Publication number: **0 237 160**

**A1**

(12) # EUROPEAN PATENT APPLICATION

(21) Application number: **87300713.2**

(51) Int. Cl.⁴: **G02F 1/13 , G09F 9/35**

(22) Date of filing: **28.01.87**

(30) Priority: **05.02.86 US 826407**

(43) Date of publication of application:
**16.09.87 Bulletin 87/38**

(84) Designated Contracting States:
**DE FR GB**

(71) Applicant: **FORD MOTOR COMPANY LIMITED**
**Eagle Way**
**Brentwood Essex CM13 3BW(GB)**
**GB**
Applicant: **FORD-WERKE**
**AKTIENGESELLSCHAFT**
**Werk Köln-Niehl Henry-Ford-Strasse**
**Postfach 60 40 02**
**D-5000 Köln 60(DE)**
**DE**
Applicant: **FORD FRANCE SOCIETE ANONYME**
**344 Avenue Napoléon Bonaparte B.P. 307**
**F-92506 Rueil Malmaison Cedex(FR)**
**FR**

(72) Inventor: **Lidsosny, Richard Alan**
**42519 Briarcliff Court**
**Canton Michigan 48187(US)**
Inventor: **Sanctorum, Joseph James**
**5531 Piccadilly Circus Street**
**West Bloomfield Michigan 48033(US)**
Inventor: **Umpirowicz, Joseph John**
**15808 Winchester Drive**
**Northville Michigan(US)**

(74) Representative: **Messulam, Alec Moses et al**
**A. Messulam & Co. 24 Broadway**
**Leigh on Sea Essex SS9 1BN(GB)**

(54) **Multicolor liquid crystal display system.**

(57) A liquid crystal display cell (130) with energizable cell areas distinguishable from deenergized areas by contrasting color illumination from either a wideband back light or ambient front light source. At least one color polarizer (120) is disposed behind the liquid crystal cell (130) and a linear analyzer polarizer (140) is disposed in front of the liquid crystal cell (130) so that the light simultaneously emanating from the energized and deenergized areas of the display is in contrasting colors and of the same polarity.

FIG. 1A.

# MULTICOLOR LIQUID CRYSTAL DISPLAY SYSTEM

The present invention is directed to the field of liquid crystal displays and more specifically to the area of providing selectable color displays of contrasting colors.

This invention is related to European Patent Application No.......... and entitled "Color selectable liquid crystal display system".

Much work has been done in attempting to improve the contrast characteristics of liquid crystal displays and, in particular to make those displays suitable for use in automotive installations. For instance, U.S. Patent No. 4,188,094 described a system whereby a third polarization sheet, behind the usual back polarizer, has bleached segments to match the location of the energizable segments in an associated liquid crystal cell. Such an arrangement provides for improved contrast of bright indicia on a dark background. In order to achieve a desired bright indicia, it is necessary to energize complimentary indicia segments to inhibit light transmission through those segments and allow the unenergized segments to provide transmission of light through the liquid crystal cell. However, it appears that since the energized segments are not aligned with effective portions of the third polarizer, the blackness at those segments may not be as complete as in the background area.

Other attempts have been made to provide liquid crystal displays in which the improved contrast is made with color. For instance, U.S. Patent No. 4,025,164 illustrates a reflective type display system in which a conventional twisted nematic liquid crystal cell is sandwiched between a linear polarizer, which is, adjacent a reflective element, and selective polarizers disposed in the front of the liquid crystal cell. In that configuration, the selective polarizers are formed from of two polarizing sheets with their preferred directions of polarization oriented at 90° to one another and each having a separately imbedded dichroic dye. The result is a device that provides selection between a display of a first color of light having one polarization orientation when the liquid crystal cell is unenergized and display of a second color of light having an orthogonal polarization orientation when the liquid cell is energized.

According to the present invention there is provided a system for achieving multicolor display, comprising a liquid crystal display cell (130) having selectively energizable conductor segments (132) energizable from an associated power souce (136) to define energized and deenergized display areas, means (140) defining a linear polarizer oriented to polarize light entering and exiting the front portion of the liquid crystal display cell in a first plane of polarization and means (120) defining a color polarizer for passing light of defined first relatively narrow band of light frequencies to define a first color with polarization components parallel to said first plane of polarization and for passing light of defined separate second band of light frequencies to define a second color with polarization components orthoganal to said first plane of polarization, disposed adjacent the rear portion of said liquid crystal display cell (130) for simultaneously providing separate orthogonally polarized bands of light frequencies to the rear of said liquid crystal display cell, wherein said system is functional with broad band light source to display light of said separate colors and of a common polarity in corresponding ones of said energized and deenergized display area when viewed through said linear polarizer means (140).

The present invention provides an improved liquid crystal display system in which energized display segments are illuminated in a color which contrasts with the simultaneously illuminated color of the deenergized background, while both colors are displayed having the same plurality. The present invention provides effective results in either a transmissive mode with illumination supplied by a broad band back light source or a reflective mode with illumination supplied by a front light ambient source.

The simultaneous emission of contrasting colors from a liquid crystal display source is highly desirable in automotive instrumentation uses, since it allows for greater flexibility in styling appearance, while at the same time allowing a greater degree of selection in crisply contrasting colors than was previously available.

Since the present invention provides that the contrasting colors emanating from the liquid crystal display are polarized in the same direction, its use in outdoor or automotive displays is seen as highly desirable. Viewers who wear polarized sunglasses will observe both of the contrasting colors displayed. Polarized sunglasses are normally polarized in a vertical direction. Therefore, the liquid crystal display system of the present invention is preferably configured to provide a display of contrasting colored light that is plane polarized parallel to the vertical.

The invention will now be described further by way of example with reference to the accompanying drawings, in which:

Figure 1A is an exploded view of a first embodiment of the present invention.

Figure 1B is a front view of the first embodiment illustrating the energized and deenergized segments thereof.

Figure 1C is a polarization diagram of light from a back light source for the deenergized segments and background portions of the first embodiment.

Figure 1D is a polarization diagram of light from a back light source for the energized segments of the first embodiment.

Figure 1E is a polarization diagram for ambient light entering the front surface of the first embodiment for the deenergized segments and background portions.

Figure 1F is a polarization diagram for ambient light entering the front surface of the first embodiment for the energize segments.

Figure 2A is an exploded view of a second embodiment of the present invention.

Figure 2B is a front view of the second embodiment illustrating the energized and deenergized segments thereof.

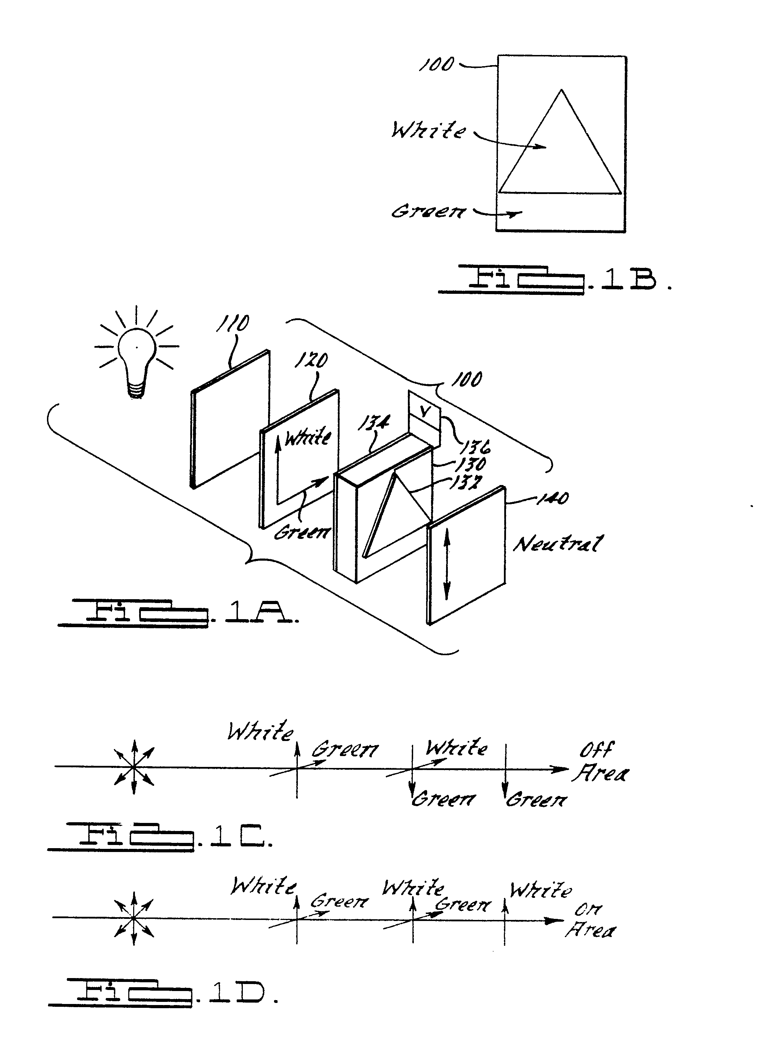

A first embodiment of the invention, shown in Figure 1A, is an exploded view of a laminated composite display 100. The composite display 100 includes a twisted nematic liquid crystal cell 130 - schematically represented as having a front surface with an electrode segment 132 configured to define an area of the liquid crystal cell in which the liquid crystal medium can be energized. A common electrode 134 is represented on the back surface of liquid crystal cell 130. The field generated by the application of an appropriate alternating voltage source 136 to the electrodes will cause the liquid crystal medium in the energized area to align and pass light without affecting the polarization of that light. On the other hand, the other areas of the liquid crystal cell 130, which are unenergized due to nonapplication of an electrical field from the source 136, have a birefringent affect on light which passes through to cause 90° rotation of the polarization components of the light.

The composite display 100 includes a neutral - (nonabsorbing) linear polarizer 140 that acts as an analyzer on the front surface of the liquid crystal display cell 130 to pass vertical polarization components of incident light.

A color polarizer 120 is located adjacent the back surface electrode 134 of the liquid crystal display cell 130 and is selected to achieve the desired contrast display for the cell. Color polarizers are designed to absorb components of one or more particular colors in the spectrum occurring in a particular plane of polarization and transmit all others. Therefore, a color polarizer such as 120, designated as a "GREEN" polarizer, and shown with its color absorption plane oriented parallel to the horizontal, absorbs all horizontally polarized components of light incident thereon, except GREEN. Horizontal components of GREEN are transmitted along with vertical components of all light frequencies to define a color "WHITE".

In the composite 100, a diffuser/reflector element 110 is provided between a broad band light source, used for back lighting the display, and the back surface of the color polarizer 120. The display 100 is suitable for providing a highly contrasted color display with either the back light source or ambient light entering through the front surface of the neutral linear polarizer 140.

In Figure 1B, the display 100 is shown as it would appear to an observer when the illustrated electrode segment 132 defines a "ON" area of liquid crystal energization and an "OFF" area where the liquid crystal is deenergized. In such a case the first embodiment provides a simultaneous WHITE display of character segments on a GREEN background and both color illuminations are provided as plane polarized light parallel to a common plane of polarization.

In Figure 1C, the results of back lighting from a broad band WHITE light source are illustrated with respect to the deenergized background portions of the display. As indicated, the vertical components of the broad band of light frequencies representing the WHITE light is passed by the color polarizer 120 while the horizontal polarization components of only a narrow band of light frequencies defining the color GREEN are passed. Both vertical and horizontal components are rotated by 90° in those unenergized portions of the liquid crystal cell 130 so that the WHITE light exiting the front surface of the liquid crystal display cell is horizontally polarized and the GREEN light is vertically polarized. Of course, only vertically polarized components of light exit through the linear polarizer 140 to provide a GREEN color to an observer in the unenergized portions of the display.

As represented by Figure 1D for the energized portions of liquid crystal cell 130, the vertical and horizontal components from the color polarizer 120 are passed through the liquid crystal cell without change and only the vertically polarized WHITE light is passed by the linear polarizer 140. Figure 1B shows the contrast of a WHITE segment against a GREEN background wherein both colors are plane polarized parallel to the vertical. Identical results occur through the use of ambient front lighting.

In Figure 1E, it is shown that the ambient light source preferably supplies a broad band of light frequencies defining WHITE. The vertical components of the WHITE ambient light is passed by the linear polarizer 140 to the liquid crystal cell 130. In the unenergized areas of the cell, the vertical components of the WHITE light are rotated by 90° and passed to the color polarizer 120 as horizontally polarized components. Of the horizontal components, only the relatively narrow band of light frequencies defining the color GREEN are passed by the color polarizer 120. Those frequencies are then retroreflected by the diffuser/reflector 110 back to the color polarizer 120, wherein the GREEN horizontally polarized light is passed to the liquid crystal cell 130. The horizontally polarized GREEN light is rotated by 90° so as to exit the cell 130 in those deenergized areas as vertically polarized GREEN light that is also passed by the linear polarizer 140.

In Figure 1F, the diagram illustrates the effects of the display 100 on ambient light by the energized portion of the cell 130. As can be seen in Figure 1F, the vertically polarized components of the ambient WHITE light, passed by the linear polarizer 140, are unaffected during transmission through the energized portion of the display cell and reflected out of the cell as vertically polarized WHITE light.

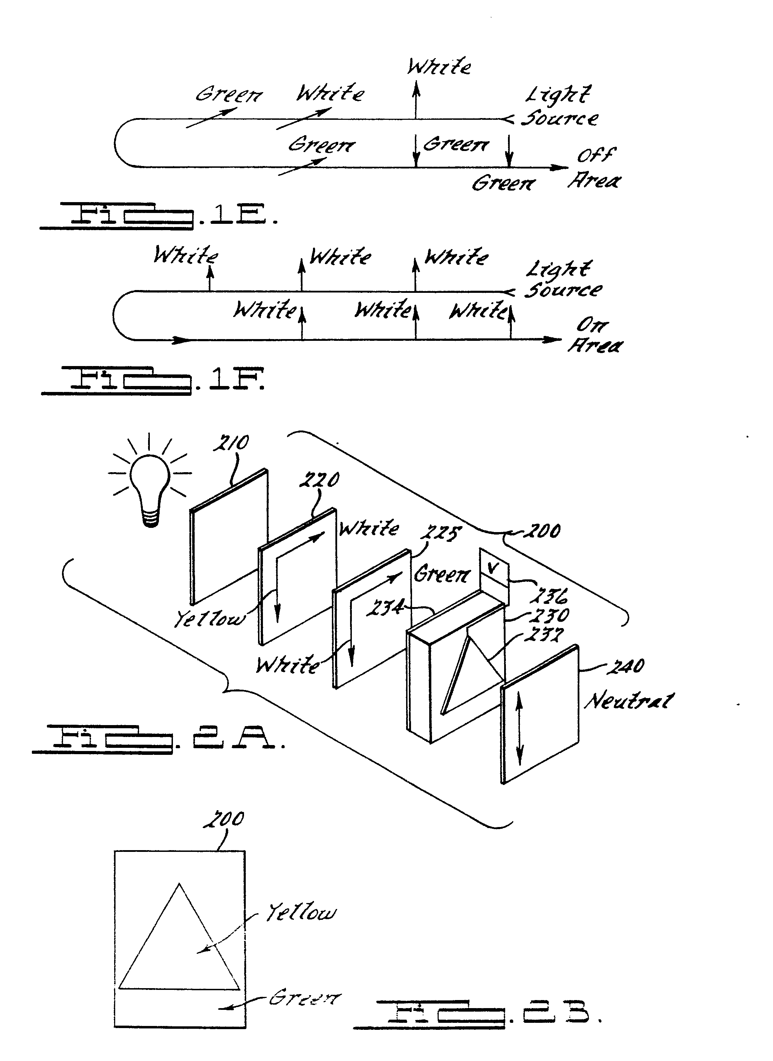

In Figure 2A, a second embodiment of the invention is illustrated, in which a plurality of color polarizer elements 220 and 225 are employed behind a liquid crystal cell 230. The color polarizer elements 220 and 225 are selected to pass different and contrasting colors in a particular plane of polarization. They are oriented to have their directions of color polarization orthogonal to one another. In that embodiment, the color polarizer 220 is adjacent to color polarizer 225 and has the characteristics of passing the horizontal components of broad band WHITE light frequencies and of passing those vertical components of a narrow band of light frequencies defining the color YELLOW. The color polarizer 225 is the same as that designated as 120 in Figure 1A and is shown as being in the same relative orientation with its direction of color polarization parallel to the horizontal.

The configuration of the display 200 results in a display as shown in Figure 2B wherein an energized portion of the liquid crystal display cell 230 between an energized electrode segment 232 and the common electrode 234 transmits YELLOW light and GREEN light is displayed in the background or unenergized areas. Both the YELLOW and the GREEN colors simultaneously emanating from the display 200 are polarized in a vertical direction as passed by the linear polarized 240.

Of course it should be realized that the display electrodes described in the embodiments herein are only exemplary. It is foreseen that the display electrodes could be of any conventional alphanumeric segments or other display indicia.

## Claims

1. A system for achieving multicolor display, comprising a liquid crystal display cell (130) having selectively energizable conductor segments (132) energizable from an associated power souce (136) to define energized and deenergized display areas, means (140) defining a linear polarizer oriented to polarize light entering and exiting the front portion of the liquid crystal display cell in a first plane of polarization and means (120) defining a color polarizer for passing light of defined first relatively narrow band of light frequencies to define a first color with polarization components parallel to said first plane of polarization and for passing light of defined separate second band of light frequencies to define a second color with polarization components orthoganal to said first plane of polarization, disposed adjacent the rear portion of said liquid crystal display cell (130) for simultaneously providing separate orthogonally polarized bands of light frequencies to the rear of said liquid crystal display cell, wherein said system is functional with broad band light source to display light of said separate colors and of a common polarity in corresponding ones of said energized and deenergized display areas when viewed through said linear polarizer means (140).

2. A system as claimed in Claim 1, wherein said first plane of polarization of said color polarizer means and of said linear polarizer means is aligned with a defined vertical reference plane and said second polarization direction is aligned with a defined horizontal reference plane.

3. A system as claimed in Claim 2, wherein said light of said first band of light frequencies is allowed to pass from the front of said liquid crystal display cell and said linear polarized means in those display areas which remain deenergized and light of said second band of light frequencies is allowed to pass from the front of said liquid display cell and said linear polarizer means in those display areas which are energized.

4. A system as claimed in any one of Claims 1 to 3, further including a relatively wide band light source disposed to the rear of said color polrizer means to provide back lighting for said system.

5. A system as claimed in any one of the preceding claims, further including means for reflecting at least a portion ⌣ ambient light, entering through the front of said linear polarizer means and being transmitted through both the liquid crystal display cell and said color polarizer means, back through said color polarizer means, the liquid crystal display cell and said linear polarizer means.

6. A system as claimed in Claim 5, wherein said reflecting means is partially transmissive and said system further includes a relatively wide band light source disposed to direct light towards said partially transmissive reflecting means and said color polarizer means.

7. A system as claimed in Claim 1, wherein said polarized components of said first and second colors passed by said color polarizer means are visibly contrasting to a human observer.

8. A system as claimed in Claim 1, wherein said second bands of light frequencies passed by said color polarizer, encompass said first bands of light frequencies.

9. A system as claimed in Claim 1, wherein said means for defining a color polarizer includes a first element for passing light frequencies of a first color polarized in said first plane of polarization, and passing only components of all light frequencies in said second plane of polarization, and a second element disposed adjacent said first element for passing only components of all light frequencies in said first plane of polarization and passing light frequencies of a second color in said second plane of polarization, wherein said first and second colors of light frequenices are separate and contrasting.

Fig. 1B.

Fig. 1A.

Fig. 1C.

Fig. 1D.

FIG.1E.

FIG.1F.

FIG.2A.

FIG.2B.

## DOCUMENTS CONSIDERED TO BE RELEVANT

EP 87300713.2

| Category | Citation of document with indication, where appropriate, of relevant passages | Relevant to claim | CLASSIFICATION OF THE APPLICATION (Int Cl.4) |
|---|---|---|---|
| Y | <u>EP - A2 - 0 157 523</u> (TEKTRONIX) <br> * Abstract; fig. 1,3 * | 1,4,7-9 | G 02 F 1/13 <br> G 09 F 9/35 |
| A | | 2,3 | |
| Y | <u>DE - A1 - 2 541 522</u> (SUNCRUX) <br> * Fig. 1,2 * | 1,4,7-9 | |
| A | | 2,3 | |
| A | ELECTRONICS, vol. 54, no. 6, March 24, 1981 <br><br> K. SMITH, "Liquid-crystal shutter changes monochrome TV images into color" <br> pages 81-84 <br><br> * Totality * | 1-4,7,8 | |
| A | <u>US - A - 4 239 349</u> (SCHEFFER) <br> * Abstract; fig. 3,5-8 * | 1-5,7,8 | TECHNICAL FIELDS SEARCHED (Int. Cl.4) <br><br> G 02 F 1/00 <br> G 09 F 9/00 |
| A | <u>US - A - 4 519 679</u> (HORIKIRI) <br> * Fig. 6,7 * | 1,4-6 | |
| D,A | <u>US - A - 4 025 164</u> (DORIGUZZI) <br> * Abstract; fig. 1a,b * | 1-5,7-9 | |

The present search report has been drawn up for all claims

| Place of search | Date of completion of the search | Examiner |
|---|---|---|
| VIENNA | 11-05-1987 | GRONAU |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82